# FASCICULE DE BREVET EUROPEEN

(11) **EP 1 364 746 B1**
(45) Date de publication et mention de la délivrance du brevet: **21.12.2005**
(21) Numéro de dépôt: 02011144.9
(22) Date de dépôt: 21.05.2002
(51) Int. Cl.: B23Q 16/08

(54) **Dispositif pour l'accouplement amovible de deux organes d'accouplement et équipement pour le préréglage d'outils de machine comprenant ce dispositif**
Kupplung zur lösbaren Verbindung von zwei Bauteilen, und Vorrichtung mit dieser Kupplung zur Voreinstellung der Werkzeuge einer Werkzeugmaschine
Coupling device for the connection of two members, and machine tool indexing device

(43) Date de publication de la demande: 26.11.2003
(73) Titulaire: Yerly, Michel, 2864 Soulce (CH)
(72) Inventeur: Yerly, Michel, 2864 Soulce (CH)
(74) Mandataire: P&TS Patents & Technology Surveys SA

(56) Documents cités:
- EP-A- 0 468 383
- DE-A- 3 743 894
- DE-A- 3 831 736
- DE-A- 3 902 854
- US-A- 5 397 231

## Description

La présente invention concerne un dispositif pour l'accouplement dans une position reproductible de deux organes d'accouplement, en particulier d'une palette sur un mandrin, ainsi qu'un équipement pour le préréglage d'outils de machine comprenant ce dispositif.

L'accouplement précis et reproductible de deux organes d'accouplement est un problème central en mécanique, en particulier dans le domaine de la mécanique de précision. Le problème est d'autant plus difficile à résoudre s'il s'agit d'un accouplement amovible, c'est à dire destiné à être démonté et remonté à plusieurs reprises, et que les deux organes d'accouplement doivent se retrouver dans la même position relative entre eux à chaque remontage.

Afin d'éviter, lors de chaque remontage, de fastidieux contrôles de positionnement à l'aide d'équipements parfois complexes et coûteux, il est généralement fait usage de repères sur les surfaces des organes d'accouplement qui entreront en contact l'une avec l'autre. Il s'agit souvent de tenons rigides sur un des deux organes d'accouplement s'insérant dans des parties creuses sur l'autre organe d'accouplement et déterminant ainsi la position relative des deux organes avec une certaine précision. Or cette précision est limitée par deux facteurs principaux : la précision d'usinage des repères et le jeu nécessaire à l'accouplement de deux pièces rigides, par exemple d'un tenon dans une partie creuse. Il est ainsi difficile d'obtenir, à l'aide de tels systèmes, un positionnement précis d'un organe d'accouplement sur l'autre.

Afin d'éliminer le jeu entre deux organes d'accouplement, il est parfois fait usage d'un élément intermédiaire souvent flexible qui est légèrement déformé lors de l'accouplement des deux organes d'accouplement.

Un tel élément intermédiaire peut également participer au positionnement des organes d'accouplement entre eux, par exemple en intégrant une partie des repères.

EP 111092 décrit par exemple un système de couplage dont le premier organe d'accouplement est destiné à entraîner le deuxième organe d'accouplement coaxial dans son mouvement de rotation. L'élément intermédiaire est un disque d'entraînement fixé au deuxième organe d'accouplement. Le disque d'entraînement comporte des ouvertures dans lesquelles s'insèrent, lors du couplage des deux organes, des tenons d'entraînement partiellement coniques usinés sur la surface du premier organe d'accouplement, déterminant ainsi la position relative des deux organes. La forme conique des tenons d'entraînement provoque la déformation au moins partielle des bords des ouvertures, assurant ainsi le centrage et le positionnement radial correct du disque d'entraînement, et par conséquent du deuxième organe d'accouplement auquel il est fixé, sur le premier organe d'accouplement.

Un système tel que décrit dans EP 111092, comprenant des tenons d'entraînement coniques usinés directement sur le premier organe d'accouplement, est particulièrement adapté à un système de couplage dans lequel une force de rotation importante est transmise entre deux organes d'accouplement coaxiaux. Il présente toutefois le désavantage majeur que sa précision d'alignement dépend essentiellement de la précision d'usinage des tenons coniques. Or il est difficile et coûteux d'obtenir une grande précision lors de l'usinage de tels profils.

DE 3831736 décrit un dispositif pour le positionnement d'une palette sur un support. Selon une variante, une plaque d'adaptation est vissée sur la face inférieure de la palette. La plaque comprend des ouvertures de positionnement destinées à collaborer avec des billes servant d'éléments de positionnement sur le support. Chaque ouverture de positionnement est située sur une partie de la plaque qui est reliée au reste par un organe de transmission déformable. Un tel dispositif ne permet pas de garantir un positionnement précis et reproductible de la palette sur son support, en raison de la déformation de l'organe de transmission des forces qui peut par exemple s'allonger dans le sens de son axe longitudinal sans que les erreurs de positionnement que cette déformation pourrait entraîner ne soient compensées.

DE 3902854 propose un système de positionnement comprenant un élément de placement complexe et difficilement usinable comportant des zones de différentes épaisseurs.

Dans beaucoup d'applications, comme par exemple dans le domaine du préréglage d'outils de machine, la précision du positionnement, par exemple de l'outil à prérégler, est essentielle, alors que le besoin d'application d'une force, par exemple sur l'outil, est faible, voire inexistant.

Le préréglage d'un outil de machine avant son utilisation sur une machine d'usinage permet d'écourter, voire d'éviter le réglage de l'outil sur la machine d'usinage avant son utilisation. Ainsi l'outil de machine peut être préréglé sur une machine de préréglage tandis que la machine d'usinage est en fonction avec un autre outil, maximisant ainsi le taux de productivité de la machine d'usinage. Afin de pouvoir être préréglé correctement sur la machine de préréglage, l'outil de machine doit se trouver dans une configuration similaire à celle dans laquelle il se trouvera sur la machine d'usinage. Les systèmes de préréglage font ainsi appel à des étalons spécifiques à chaque machine d'usinage, reproduisant, par exemple, la configuration des éléments de fixation de l'outil sur la machine d'usinage. Ces étalons doivent également être très précisément positionnés par rapport à la référence de la machine de préréglage afin que le préréglage de l'outil soit le plus précis possible. En revanche, pratiquement aucune force n'est appliquée sur l'outil de machine durant cette opération. Pour une telle application, par exemple, le système décrit par EP 111092 est trop complexe et trop coûteux si l'on veut atteindre la précision de positionnement nécessaire.

La majorité des machines de préréglage de l'art antérieur ne sont équipées par conséquent que d'un seul étalon fixe, ne permettant ainsi que le préréglage des outils destinés à un type de machine, ce qui est peu avantageux par exemple pour les entreprises de mécanique possédant un parc de machines hétéroclite.

Certaines machines de préréglage de l'art antérieur sont cependant adaptées à recevoir des équipements de préréglage comprenant plusieurs étalons, disposés par exemple sur un barillet rotatif, permettant l'utilisation d'une seule machine de préréglage pour le préréglage d'outil de différentes machines d'usinage. Le nombre d'étalons est toutefois limité par le nombre de positions du barillet et leur type est déterminé lors de la production de l'équipement de préréglage, empêchant ainsi son adaptation au préréglage d'outil de toute nouvelle machine d'usinage.

Un des buts de la présente invention est de proposer un dispositif de fabrication simple permettant le positionnement précis et reproductible de deux organes d'accouplement.

Un autre but de la présente invention est de proposer un dispositif permettant le positionnement précis et reproductible de deux organes d'accouplement à un coût réduit.

Un autre but de la présente invention est de proposer un équipement de préréglage d'outil de machine modulaire et adaptable au préréglage d'outil de toute nouvelle machine d'usinage.

Ces buts sont atteints par le dispositif et l'équipement de préréglage des revendications indépendantes correspondantes, des variantes d'exécution préférentielles étant indiquées par les revendications dépendantes.

En particulier, ces buts sont atteints par un dispositif comprenant un premier organe d'accouplementpar exemple un mandrin, et une plaque de centrage, la plaque de centrage étant destinée à être fixée à un deuxième organe d'accouplement, par exemple une palette, pour assurer le positionnement reproductible du deuxième organe d'accouplement sur le premier organe d'accouplement, le premier organe d'accouplement comprenant au moins trois tenons, la plaque de centrage comprenant au moins trois parties creuses, chacune des parties creuses coopérant avec un tenon lors de l'accouplement du deuxième organe d'accouplement au premier organe d'accouplement de manière à déterminer la position de la plaque de centrage par rapport au premier organe, chacun des tenons comportant au moins une portion de sphère, une zone flexible délimitée par au moins une encoche étant définie autour de chacune des parties creuses et étant reliée au reste de la plaque de centrage par deux zones de torsion permettant son pivotement. Le dispositif de l'invention permet ainsi un positionnement précis à l'aide d'éléments moins complexes et par conséquent moins coûteux à produire.

En particulier, ces buts sont en outre atteints par un équipement pour le préréglage d'outils de machine, destiné à collaborer avec une surface de référence d'une machine de préréglage et comprenant
- au moins un étalon, la position de l'étalon par rapport à la surface de référence étant précisément déterminée, l'étalon étant fixé à une palette pouvant être accouplée de manière amovible et reproductible à un mandrin destiné à être fixé sur la surface de référence,
- une plaque de centrage destinée à être fixée sur la palette, la plaque de centrage et le mandrin constituant un dispositif tel que décrit plus haut. L'équipement pour le préréglage d'outils de machine selon l'invention permet ainsi l'utilisation de plusieurs palettes portant chacune un étalon différent adapté chacun aux outils d'une machine d'usinage différente, offrant ainsi de nouvelles possibilité de modularité et d'adaptation de l'équipement de préréglage.

La présente invention sera mieux comprise à l'aide des figures 1 à 6 illustrant à titre d'exemple illustratif et non limitatif la version préférentielle de l'invention, montrant :
Figure 1, le premier organe d'accouplement du dispositif,
Figure 2, la plaque de centrage du dispositif,
Figure 3, le deuxième organe d'accouplement auquel la plaque de centrage est destinée à être fixée,
Figure 4, une coupe du dispositif et du deuxième organe d'accouplement en position desserrée,
Figure 5a, une coupe du dispositif et du deuxième organe d'accouplement en position serrée,
Figure 5b, un détail de la coupe de la figure 5a,
Figure 6, une machine de préréglage d'outils de machine associée à un équipement de préréglage utilisant un dispositif selon l'invention.

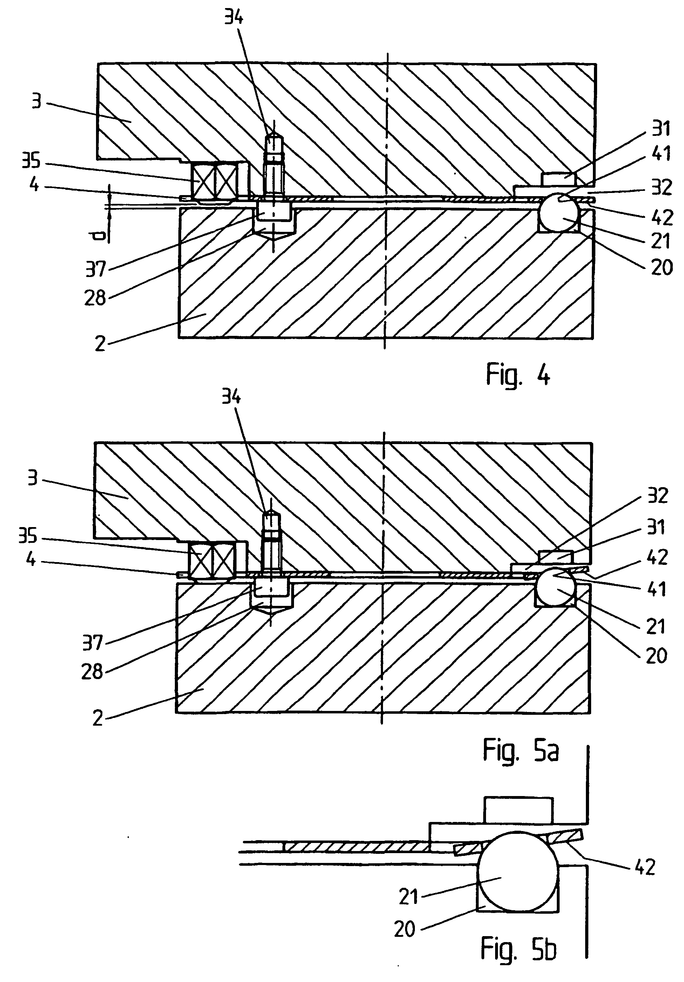

Dans la version préférentielle de l'invention, illustrée à la figure 4, le dispositif comprend un premier organe d'accouplement 2 comportant des tenons 21 et une plaque de centrage 4 fixée à un deuxième organe d'accouplement 3.

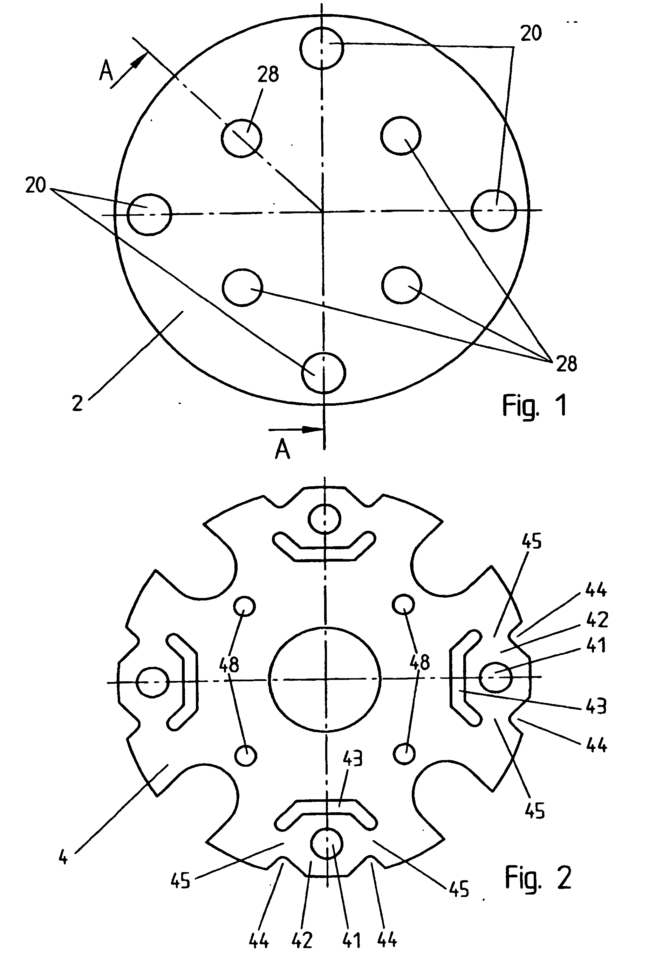

Le premier organe d'accouplement (figure 1) est un mandrin 2 sur lequel peuvent être fixées, de manière amovible et par des moyens de fixation non représentés, par exemple des palettes interchangeables. Sur la face supérieure du mandrin 2 sont usinés des logements 20, de préférence cylindriques ou hémisphériques, destinés à recevoir des tenons. En référence aux figures 4 et 5, les tenons 21 sont constitués de préférence par des billes 21 de diamètre connu et précis, chassées dans les logements 20.

La plaque de centrage 4 (figure 2) est de préférence usinée dans un matériau dur possédant une certaine élasticité, par exemple en acier. Elle comporte des cavités creuses 41, par exemple des trous circulaires 41, dont le nombre et la disposition correspondent au nombre et à la disposition des logements 20 sur le mandrin 2. Autour de chaque trou circulaire 41 est définie une zone flexible 42 délimitée par des encoches 43, 44. Chaque zone flexible est reliée au reste de la plaque de centrage par des zones de torsion 45 permettant le pivotement de la zone flexible 42 autour d'un axe non représenté reliant les deux zones de torsion 45. Il est également possible de délimiter la zone flexible 42 par des zones où l'épaisseur de la plaque serait diminuée, facilitant ainsi la déformation de ces zones sous l'action d'une force extérieure. La plaque de centrage 4 comprend par exemple des trous 48 permettant sa fixation, par exemple à l'aide de vis passées à travers ces trous 48, à un deuxième organe d'accouplement

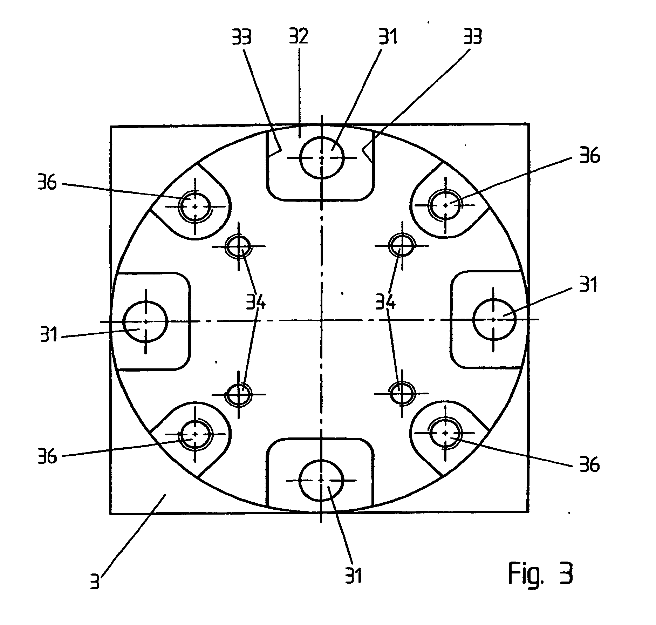

Dans sa version préférentielle, le dispositif selon l'invention est associé de préférence à une palette 3 (figure 3), comprenant sur sa face inférieure des ouvertures filetées 34 dont la disposition correspond à celle des trous 48 de la plaque de centrage 4, permettant ainsi la fixation de cette dernière au moyen de vis ou de boulons. D'autres moyens de fixation de la plaque de centrage 4 sur la palette 3 peuvent être imaginé par l'homme du métier. La plaque de centrage 4 pourrait par exemple être rivetée ou soudée à la palette 3. La palette 3 possède par exemple une base circulaire de même diamètre que la plaque de centrage 4 et que le mandrin 2, et un plateau supérieur carré, permettant la disposition ou la fixation d'éléments divers, par exemple des étalons pour le préréglage d'outils de machine. La palette 3 comprend des moyens de fixation non représentés destinés à coopérer avec les moyens de fixation du mandrin 2 afin de la fixer à ce dernier, de préférence de manière amovible.

La Figure 4 représente une coupe selon l'axe A-A illustré à la figure 1 de la version préférentielle du dispositif selon l'invention associé à la palette 3, avant le serrage des éléments de fixation. La figure 5 représente une coupe selon le même axe A-A des mêmes éléments, après serrage des éléments de fixation.

La plaque de centrage 4 est fixée à la palette 3 au moyen de vis 37. Des dégagements 28 sont prévus sur le mandrin 2 afin d'éviter tout contact des têtes des vis 37 avec le mandrin 2 lors du positionnement de la palette 3 sur le mandrin 2. La palette 3 est équipée de cales 35 déterminant l'écartement minimal entre le mandrin 2 et la palette 3. Ces cales 35 sont par exemple vissées dans des ouvertures filetées 36 prévus à cet effet sur la palette 3. Des dégagements sont prévus sur la plaque de centrage 4 afin de permettre le contact direct des cales 35 sur la surface du mandrin 2.

Le diamètre des trous circulaires 41 sur la plaque de centrage 4 est inférieur au diamètre des billes 21, de façon à ce que la circonférence de chaque trou circulaire 41 appuie sur les billes 21 alors que les cales 35 sont éloignées d'une distance d du mandrin 2. De préférence, cette distance d est inférieure à 1 millimètre, de préférence 0,3 millimètre. D'autres dimensions sont toutefois possibles.

Lors du serrage des moyens de fixation non représentés, la palette 3 est approchée du mandrin 2, agissant contre la force d'appui des bords des trous 41 sur les billes 21. Les trous circulaires 41 glissent alors sur la circonférence des billes 21, provoquant ainsi la déformation des zones de torsion 45 et le pivotement des zones flexibles 42 vers le centre du dispositif. Ce pivotement illustré sur les figures 5a et 5b est permis par les dégagements 32 pratiqués sur la face inférieure de la palette 3 . La régularité de la déformation des zones de torsion 45 lors du pivotement est assurée par les zones d'appui 33 constituées par les arêtes des dégagements 32 appuyant sur les zones de torsion 45 lorsque la plaque de centrage 4 est fixée sur la palette 3. Des dégagements supplémentaires 31 sont de préférence prévus sur la palette 3 en regard des billes 21, de manière à éviter tout contact direct entre les billes 21 et la palette 3 lors du serrage des moyens dé fixation.

L'appui de la circonférence des cavités creuses 41 sur la partie en portion de sphère des tenons 21 garantit la régularité du pivotement des zones flexibles 42 lors du serrage des éléments de fixation. Les forces provoquant le pivotement de zones flexibles 42 sont réparties sensiblement régulièrement entre les zones flexibles, assurant ainsi un centrage précis et reproductible de la plaque de centrage 4, et par conséquent du deuxième organe d'accouplement 3, sur le premier organe d'accouplement 2.

La précision de la position relative des deux organes d'accouplement, par exemple du mandrin 2 et de la palette 3, dépend ainsi uniquement de la précision et de la régularité du diamètre des billes 21, du diamètre et de la position des logements 20 et du diamètre et de la position des trous circulaires 41. Or les billes calibrées sont des composants mécaniques courants et relativement peu coûteux, produits généralement de manière industrielle. L'usinage de trous circulaires 41 ou de logements 20 de préférence cylindriques, de dimension et de position précises est facile et peut être effectué en une seule opération, minimisant ainsi également les risques d'imprécision. Les coûts d'un tel usinage sont sensiblement inférieurs aux coûts engendrés par l'usinage d'éléments non-cylindriques et en relief de même précision.

La précision de fabrication du deuxième organe d'accouplement 2 n'a ainsi pas d'influence sur la reproductibilité du positionnement relatif des deux organes d'accouplement. Seules les cales 35 doivent être de dimension précise afin de garantir un écartement correct et régulier entre les deux organes d'accouplement.

Afin que le positionnement soit reproductible, il faut également que la déformation de la plaque de centrage 4 lors du serrage des éléments de fixation soit entièrement réversible. Elle doit donc être effectuée dans la zone d'élasticité de la matière utilisée pour sa fabrication.

Dans l'illustration qui est faite ci-dessus de la version préférentielle du dispositif selon l'invention, la plaque de centrage est fixée à une palette 3 telle que représentée à la figure 3. La plaque de centrage 4 selon la version préférentielle de l'invention peut cependant être fixée à tout autre deuxième organe d'accouplement dont la position relativement au premier organe d'accouplement 2 doit être garantie avec précision.

Dans la version préférentielle de l'invention, les tenons 21 comprenant au moins une portion de sphère sont formés par la partie saillante d'une bille 21 chassée dans un logement 20 du mandrin 2. L'homme du métier comprendra cependant qu'il est également possible de former des tenons comprenant au moins une portion de sphère à l'aide d'autres moyens, par exemple à l'aide de tiges cylindriques possédant une extrémité hémisphérique et logées dans des logements du premier organe d'accouplement, ou par des portions de sphères, par exemple des demi-sphères, fixées à la surface du premier organe d'accouplement, par exemple par collage, par soudure ou par vissage. Il est également possible d'usiner des tenons comportant au moins une portion de sphère directement sur la surface du premier organe d'accouplement. Cette dernière variante présente toutefois le désavantage d'augmenter sensiblement les coûts de production du dispositif.

L'homme du métier comprendra également que le nombre de tenons 21 et leur disposition peuvent être variés. De manière préférentielle, on emploiera au moins trois tenons 21 afin de définir avec précision le plan de la palette 3.

Une application de la présente invention réside par exemple dans le domaine du préréglage d'outils de machine.

L'application à un équipement de préréglage d'un dispositif permettant le positionnement précis et reproductible, sur un mandrin fixe par rapport à la référence de la machine de préréglage, d'une ou plusieurs palettes interchangeables portant par exemple chacune un étalon différent, offre d'inattendues nouvelles possibilités par rapport aux équipements de préréglage de l'art antérieur. Une telle application permet en effet d'équiper une machine de préréglage de manière à ce qu'elle puisse prérégler les outils de toute machine d'usinage existante. Une telle application permet en outre de choisir précisément le nombre et le type de machines en fonction desquelles la machine de préréglage doit être équipée. Une telle application permet également d'équiper à tout moment la machine de préréglage pour le préréglage des outils d'une nouvelle machine d'usinage, y compris d'une machine d'usinage inconnue lors de la conception de la machine de préréglage.

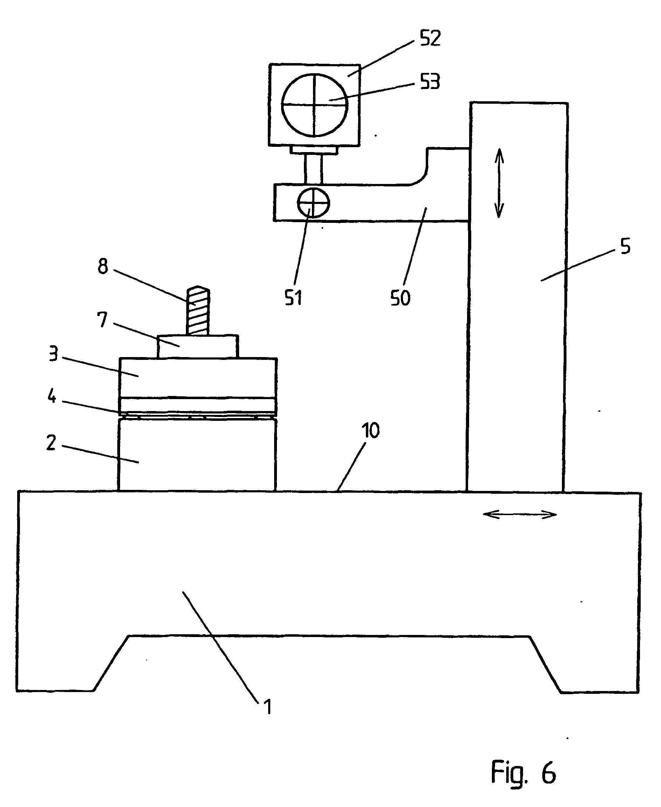

La figure 6 représente un exemple de machine de préréglage associée à un équipement de préréglage comprenant un tel dispositif. La machine de préréglage 1 possède une surface de référence 10. Une colonne 5 associée à un bras 50 permet le mouvement, par exemple dans un plan perpendiculaire à la surface de référence 10, d'un système de contrôle du préréglage, par exemple d'un système de visée optique 51. La position du centre du système de visée optique 51 par rapport au plan de référence 10 est parfaitement connue. Un écran 52 permet généralement de visualiser une représentation 53 agrandie de l'image capturée par le système de visée 51, afin de permettre une plus grande précision dans le contrôle visuel du préréglage de l'outil de machine 8.

Au moins un étalon 7 est fixé sur une palette 3. Un mandrin 2 est fixé sur la surface de référence 10. La position de chaque étalon 7 sur sa palette 3 est déterminée de manière que, lorsque la palette 3 est accouplée de manière amovible au mandrin 2, la position de l'étalon 7 par rapport à la surface de référence 10 soit parfaitement connue et adaptée au préréglage de l'outil de machine 8 correspondant.

L'équipement de préréglage associé à la machine de préréglage 1 peut comprendre plusieurs palettes 3 équipées chacune de préférence d'un étalon 7 différent, offrant ainsi une grande modularité à la machine de préréglage 1. Le nombre de palettes 3 n'est pas limité et il est en tout temps possible d'ajouter une palette 3 munie d'un nouvel étalon 7 à l'équipement de préréglage.

Pour garantir la précision d'une telle machine de préréglage 1, il est nécessaire qu'à chaque fois qu'une palette 3 est accouplée à nouveau au mandrin 2, la position de l'étalon 7 par rapport à la surface de référence 10 soit identique. Ainsi, il faut que le positionnement de la palette 3 sur le mandrin 2 soit reproductible avec la plus grande précision.

Pour ce faire, l'équipement de préréglage comprenant le mandrin 2 et au moins une palette 3 est équipée, par exemple, de plaques de centrage 4 telle que décrite précédemment fixée à chaque palette 3 et le mandrin 2 est équipé de tenons comportant au moins une portion de sphère, constitués par exemple par la partie saillante de billes insérées dans des logements sur sa surface supérieure. Le positionnement précis de chaque palette 3 lors de chaque accouplement au mandrin 2 est ainsi garanti de la manière exposée plus haut.

L'homme du métier comprendra cependant que le premier organe d'accouplement équipé de tenons comportant au moins une portion de sphère et la plaque de centrage décrits ci-dessus peuvent également être adapté à d'autres applications, en particulier à toute application ou deux organes d'accouplement doivent être associés avec grande précision et de façon reproductible.

## Revendications

1. Dispositif comprenant un premier organe d'accouplement (2), par exemple un mandrin, et une plaque de centrage (4), ladite plaque de centrage (4) étant destinée à être fixée à un deuxième organe d'accouplement (3), par exemple une palette, pour assurer le positionnement reproductible dudit deuxième organe d'accouplement (3) sur ledit premier organe d'accouplement (2), ledit premier organe d'accouplement (2) comprenant au moins trois tenons (21), ladite plaque de centrage (4) comprenant au moins trois parties creuses (41),chacune desdites au moins trois parties creuses (41) coopérant avec un desdits au moins trois tenons (21) lors de l'accouplement dudit deuxième organe d'accouplement (4) audit premier organe d'accouplement (2) de manière à déterminer la position de ladite plaque de centrage (4) par rapport audit premier organe (2), chacun desdits au moins trois tenons (21) comportant au moins une portion de sphère, et une zone flexible (42) delimitée par au moins une encoche (43) étant définie autour de chacune desdites au moins trois partie creuses (41) **caractérisé en ce que** la zone flexible est reliée au reste de ladite plaque de centrage (4) par deux zones de torsions (45) permettant le pivotement de ladite zone flexible (42).

2. Dispositif selon la revendication précédente, le pivotement de ladite zone flexible (42) s'effectuant autour d'un axe reliant lesdites deux zones de torsion (45).

3. Dispositif selon l'une des revendications précédentes, le pivotement de ladite zone flexible (42) s'effectuant vers le centre dudit dispositif.

4. Dispositif selon l'une des revendications précédentes, ladite plaque de centrage (4) étant d'épaisseur sensiblement constante.

5. Dispositif selon l'une des revendications précédentes, ledit premier organe d'accouplement étant un mandrin (2) destiné au support de palettes (3).

6. Dispositif selon l'une des revendications précédentes, chacune desdites au moins trois parties creuses (41) étant un trou circulaire de diamètre inférieur au diamètre maximal desdits au moins trois tenons (21).

7. Dispositif selon l'une des revendications précédentes, ladite plaque de centrage (4) étant destinée à être fixée à une palette (3).

8. Dispositif selon l'une des revendications précédentes, chacun desdits au moins trois tenons (21) étant constitué par la partie saillante d'une bille chassée dans une cavité (20) dudit premier organe d'accouplement (2).

9. Equipement (7, 2, 3, 4) pour le préréglage d'outils de machine, destiné à collaborer avec une surface de référence (10) d'une machine de préréglage (1) et comprenant
- au moins un étalon (7), la position dudit au moins un étalon (7) par rapport à ladite surface de référence (10) étant précisément déterminée, ledit au moins un étalon (7) étant fixé à une palette (3) pouvant être accouplée de manière amovible et reproductible à un mandrin (2) destiné à être fixé sur ladite surface de référence (10),
- une plaque de centrage (4) destinée à être fixée sur ladite palette (3), ladite plaque de centrage (4) et ledit mandrin (2) constituant un dispositif selon l'une des revendications 5 à 8.

## Patentansprüche

1. Vorrichtung mit einem ersten Kupplungsorgan (2), beispielsweise einem Dorn, und einer Zentrierungsplatte (4), wobei die besagte Zentrierungsplatte (4) dazu bestimmt ist, an einem zweiten Kupplungsorgan (3), beispielsweise einer Palette, befestigt zu werden, um die wiederholbare Positionierung des besagten zweiten Kupplungsorgans (3) auf dem besagten ersten Kupplungsorgan (2) zu gewährleisten, wobei das besagte erste Kupplungsorgan (2) mindestens drei Zapfen (21) umfasst, wobei die besagte Zentrierungsplatte (4) mindestens drei Hohlteile (41) umfasst, wobei jede der besagten mindestens drei Hohlteile (41) mit einem der besagten mindestens drei Zapfen (21) während der Kupplung des besagten zweiten Kupplungsorgans (4) am besagten ersten Kupplungsorgan (2) zusammenarbeitet, so dass die Position der besagten Zentrierungsplatte (4) in Bezug auf das besagte erste Organ (2) bestimmt wird, wobei jeder der besagten mindestens drei Zapfen (21) mindestens eine Sphärenportion und eine flexible Zone (42) aufweist, welche durch mindestens eine um jeden der besagten mindestens drei Hohlteile (41) definierte Kerbe (43) abgegrenzt ist,
**dadurch gekennzeichnet, dass** die flexible Zone mit dem Rest der besagten Zentrierungsplatte (4) durch zwei Drehzonen (45) verbunden ist, welche das Schwenken der besagten flexiblen Zone (42) erlauben.

2. Vorrichtung gemäss dem vorhergehenden Anspruch, wobei das Schwenken der besagten flexiblen Zone (42) um eine die besagten zwei Drehzonen (45) verbindenden Achse erfolgt.

3. Vorrichtung gemäss einem der vorhergehenden Ansprüche, wobei das Schwenken der besagten flexiblen Zone (42) in Richtung des Zentrums der besagten Vorrichtung erfolgt.

4. Vorrichtung gemäss einem der vorhergehenden Ansprüche, wobei die besagte Zentrierungsplatte (4) eine spürbar konstante Dicke aufweist.

5. Vorrichtung gemäss einem der vorhergehenden Ansprüche, wobei das besagte erste Kupplungsorgan ein für das Tragen von Paletten (3) geeigneter Dorn (2) ist.

6. Vorrichtung gemäss einem der vorhergehenden Ansprüche, wobei jeder der besagten mindestens drei Hohlteile (41) ein kreisförmiges Loch mit einem Durchmesser kleiner als der maximale Durchmesser der besagten mindestens drei Zapfen (21) ist.

7. Vorrichtung gemäss einem der vorhergehenden Ansprüche, wobei die besagte Zentrierungsplatte (4) dazu bestimmt ist, an eine Palette (3) befestigt zu werden.

8. Vorrichtung gemäss einem der vorhergehenden Ansprüche, wobei jeder der besagten mindestens drei Zapfen (21) aus dem vorstehenden Teil einer in einen Hohlraum (20) des besagten ersten Kupplungsorgans (2) eingeschlagenen Kugel besteht.

9. Ausrüstung (7, 2, 3, 4) für das Voreinstellen von Maschinenwerkzeugen, dazu bestimmt, mit einer Referenzfläche (10) einer Voreinstellungsmaschine (1) zusammenzuarbeiten und mit:
- mindestens einem Normal (7), wobei die Position des besagten mindestens eines Normals in Bezug auf die besagte Referenzfläche (10) genau bestimmt ist, wobei mindestens ein Normal (7) an einer Platte (3) befestigt wird, die auf abnehmbare und wiederholbare Weise mit einem Dorn (2) gekuppelt werden kann, der bestimmt ist, auf der besagten Referenzfläche (10) angebracht zu werden,
- einer Zentrierungsplatte (4), die dazu bestimmt ist, auf der besagten Palette (3) angebracht zu werden, wobei die besagte Zentrierungsplatte (4) und der besagte Dorn (2) eine Vorrichtung gemäss einem der Ansprüche 5 bis 8 bildet.

## Claims

1. Device comprising a first coupling element (2), for example a chuck, and a centering plate (4), said centering plate (4) being designed to be fastened to a second coupling element (3), for example a pallet, to ensure the reproducible positioning of said second coupling element (3) onto said first coupling element (2), said first coupling element (2) comprising at least three pegs (21), said centering plate (4) comprising at least three hollow portions (41), each said at least three hollow portions (41) working with said at least three pegs (21) during the coupling of said second coupling element (4) to said first coupling element (2) so as to determine the position of said centering plate (4) relative to said first coupling element (2), each of said at least three pegs (21) comprising at least one spherical portion, and in a manner that around each of said at least three hollow portions (41) a flexible zone (42) is defined, demarcated by at least one notch (43), **characterized in that** the flexible zone is connected to the rest of the centering plate (4) by two torsion zones (45) allowing said flexible zone (42) to pivot.

2. Device according to the preceding claim, the pivoting of said flexible zone (42) being effected around an axis connecting said two torsion zones (45).

3. Device according to one of the preceding claims, the pivoting of said flexible zone (42) being effected towards the centre of said device.

4. Device according to one of the preceding claims, said centering plate (4) being of more or less continuous thickness.

5. Device according to one of the preceding claims, said first coupling element being a chuck (2) designed to support pallets (3).

6. Device according to one of the preceding claims, each of said at least three hollow portions (41) being a circular hole of a diameter less than the maximal diameter of said at least three pegs (21).

7. Device according to one of the preceding claims, said centering plate (4) being designed to be fastened onto a pallet (3).

8. Device according to one of the preceding claims, each of said at least three pegs (21) being constituted by the protruding part of a ball driven home into a cavity (20) of said first coupling element (2).

9. Equipment (7, 2, 3, 4) for pre-adjusting machine tools, designed to work with a reference surface (10) of a pre-adjusting machine (1) and comprising:
at least one gauge (7), the position of said at least one gauge (7) relative to said reference surface (10) being precisely determined, said at least one gauge (7) being fastened to a pallet (3) capable of being coupled removably and reproducibly to a chuck (2) designed to be fastened onto said reference surface (10),
a centering plate (4) designed to be fastened onto said pallet (3), said centering plate (4) and said chuck (2) constituting a device according to one of the claims 5 to 8.
